Europäisches Patentamt

European Patent Office

Office européen des brevets

(19)

(11) EP 0 723 346 A1

(12) **DEMANDE DE BREVET EUROPEEN**

(43) Date de publication:
24.07.1996 Bulletin 1996/30

(51) Int Cl.6: **H04J 3/18**

(21) Numéro de dépôt: 95203454.4

(22) Date de dépôt: 12.12.1995

(84) Etats contractants désignés:
DE FR GB

(30) Priorité: 21.12.1994 FR 9415408

(71) Demandeurs:
- **T.R.T. TELECOMMUNICATIONS RADIOELECTRIQUES ET TELEPHONIQUES**
**75013 Paris (FR)**
Etats contractants désignés:
**FR**
- **PHILIPS ELECTRONICS N.V.**
**5621 BA Eindhoven (NL)**
Etats contractants désignés:
**DE GB**

(72) Inventeurs:
- **Lamballe, Philippe, c/o Société Civile S.P.I.D.**
**F-75008 Paris (FR)**
- **N'Dri, Brou Denis, c/o Société Civile S.P.I.D.**
**F-75008 Paris (FR)**

(74) Mandataire: **Chaffraix, Jean**
**Société Civile S.P.I.D.**
**156, Boulevard Haussmann**
**75008 Paris (FR)**

(54) **Système de transmission de signaux vocaux sous forme numérique et dispositif de codage-décodage pour un tel système**

(57)    Ce système comporte essentiellement, dans le cadre de l'invention, un circuit de compression- décompression CVA. Ce circuit est formé de deux processeurs DSP et μP. Le premier est accouplé à un circuit convertisseur analogique-numérique et numérique-analogique CNA_AN, pour fournir et traiter les signaux vocaux des abonnés connectés à des accès AR1A et AE1A. C'est ce processeur DSP qui effectue les compressions et décompressions. Le second processeur μP reçoit sur un accès AR2N et transmet sur un accès AE2N les signaux numériques regroupés en trames. Pour éviter les retards intempestifs pour les signaux vocaux, on propose d'effectuer la compression prioritairement à la décompression.

Application : réseaux de transmission d'informations.

FIG. 2

## Description

La présente invention concerne un système de transmission de signaux vocaux sous forme de trames de signaux numériques, entre au moins un premier abonné et un deuxième abonné comportant notamment :

■ un milieu de transmission pour transmettre lesdites trames,

■ des premiers accès réception (AR1A, BR1A) pour recevoir des signaux analogiques vocaux desdits abonnés,

■ des premiers accès émission (AE1A, BE1A) pour fournir des signaux analogiques vocaux auxdits abonnés,

■ au moins un dispositif de codage-décodage (CVA) pour former lesdites trames de signaux numériques après compression des signaux analogiques vocaux et pour rétablir, sous forme analogique, les signaux vocaux analogiques après décompression des trames numériques, dispositif muni :

- d'un accès réception de trames pour recevoir lesdites trames (AR2N),
- d'un accès émission de trames pour fournir lesdites trames (AE2N),
- d'un circuit de compression-décompression (CPRSSA-DECPRSSA) pour effectuer lesdites opérations de compression et de décompression,
- de moyens de commandes couplés audit dispositif de compression-décompression pour commander la compression et la décompression.

L'invention concerne aussi un dispositif de codage-décodage pour un tel système.

L'application envisagée pour un tel système est de transmettre des communications téléphoniques sur un réseau numérique de données. Cette transmission de communications téléphoniques ne peut se faire, pour des raisons d'économie de débit à transmettre, que sous forme compressée.

Les processus de compression et de décompression introduisent un retard auquel s'ajoute le délai de transmission sur le réseau numérique. Or, ce temps cumulé ne doit pas amener un retard qui excède 200 ms, sinon les abonnés ressentent une gêne importante dans leurs communications téléphoniques.

Ce problème du retard, aggravé par les processus de compression et de décompression, est mentionné dans l'article :
"CODING OF SPEECH AND WIDEBAND AUDIO." de Nikil S., et al., paru dans la revue éditée par AT&T TECHNICAL JOURNAL, datée d'octobre 1990. Les seuls moyens évoqués dans cet article pour minimiser ces retards sont d'utiliser un bon algorithme de compression-décompression.

L'invention propose un système dans lequel des mesures ont été prises pour éviter un temps de retard trop important sans tenir compte de l'algorithme utilisé.

Pour cela, un tel système est remarquable en ce que :

■ le circuit de compression-décompression est conçu pour effectuer une compression et une décompression à la fois,

et en ce qu'il est prévu :

■ des moyens de priorité pour agir sur les moyens de commande pour mettre le dispositif de compression-décompression en position de compression prioritairement à la position de décompression.

Ainsi, par l'invention, les processus de compression et de décompression sont en principe exécutés par des processeurs de signaux qui sont, en général, des dispositifs de traitement séquentiels, la proposition de priorité du dispositif de compression n'introduit donc pas de retard supplémentaire.

On remarquera que, par l'invention, il est possible de n'utiliser qu'un seul de ces processeurs pour effectuer la compression et la décompression.

La description suivante faite en regard des dessins ci-annexés, le tout donné à titre d'exemple non limitatif, fera bien comprendre comment l'invention peut être réalisée.

- La figure 1 montre un système de l'invention.
- La figure 2 montre un dispositif de compression-décompression de l'invention.
- Les figures 3, 4, 5, 6 et 7 montrent des organigrammes explicitant le fonctionnement d'un premier processeur faisant partie du dispositif de la figure 2.
- Les figures 8, 9, 10 et 11 montrent des organigrammes explicitant le fonctionnement d'un second processeur faisant partie du dispositif de la figure 2.
- La figure 12 est un diagramme temps destiné à résumer le fonctionnement du dispositif de l'invention.

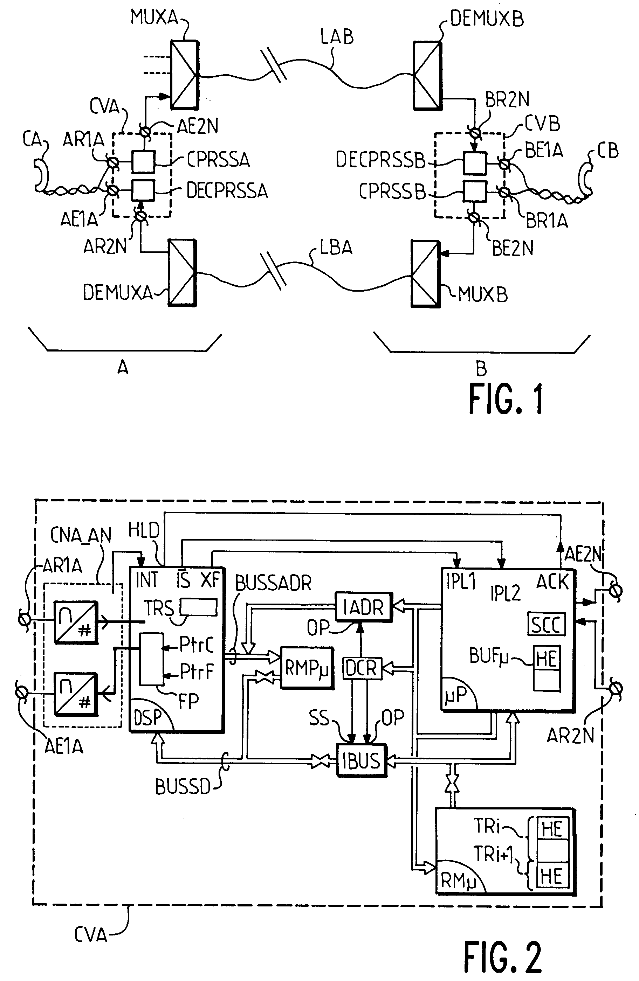

A la figure 1 la référence CA représente le combiné téléphonique d'un premier abonné rattaché à une extrémité A d'un système de transmission conforme à l'invention. Les signaux vocaux analogiques émanant du combiné CA sont reçus à un accès réception AR1A et les signaux vocaux que doit restituer le combiné CA sont fournis à un accès émission AE1A. La référence CB est la référence du combiné d'un deuxième abonné, rattaché à une extrémité B dudit système par l'intermédiaire d'accès BR1A et BE1A. Les signaux vocaux des deux abonnés rattachés aux extrémités A et B sont traités respectivement par des dispositifs de codage-décodage CVA et CVB. Ces dispositifs CVA et CVB comprennent respectivement des circuits de compression-décompression formés d'une unité de compression CPRSSA et d'une unité de décompression DECPRSSA pour le dispositif CVA et d'une unité de compression CPRSSB et d'une unité de décompression DECPRSSB pour le dispositif CVB. Les signaux vocaux numériques, comprimés par le dispositif CPRSSA, sont rendus disponibles à un accès AE2N du dispositif CVA et les signaux vocaux numériques, comprimés par le dispositif CPRSSB, sont rendus disponibles à un accès BE2N du dispositif CVB. Ces signaux vocaux comprimés par les dispositifs CPRSSA et CPRSSB sont respectivement transmis via le réseau aux accès BR2N et AR2N pour y être décompressés. Les signaux vocaux de l'accès AE2N sont appliqués à une entrée d'un multiplexeur MUXA qui peut être relié par ses autres entrées à d'autres sources de données de natures différentes de celles des signaux vocaux. Un multiplexeur MUXB est prévu au niveau de l'extrémité B pour les mêmes fonctions que le multiplexeur MUXA. De manière similaire, les données appliquées à l'accès AR2N proviennent de la sortie d'un démultiplexeur DEMUXA et celles appliquées à l'accès BR2N de la sortie d'un démultiplexeur DEMUXB. Le multiplexeur MUXA et le démultiplexeur DEMUXB sont reliés par une liaison LAB, tandis que le multiplexeur MUXB et le démultiplexeur DEMUXA sont reliés par une liaison LBA. Ces liaisons peuvent être réalisées de différentes manières, par exemple au moyen d'un réseau de type LAN (réseau local) ou WAN (réseau à longue distance).

A la figure 2, on a détaillé la structure du dispositif de compression-décompression CVA. Il va de soi que le dispositif CVB peut avoir d'une manière avantageuse une structure identique.

Ce dispositif est formé d'un convertisseur CNA_AN qui effectue les opérations de conversion analogique-numérique d'une part, et les opérations de conversion numérique-analogique d'autre part. Ce convertisseur est relié par les accès AR1A et AE1A pour signaux analogiques au combiné CA. Un processeur de signal DSP traite les données provenant du convertisseur CNA_AN et lui fournit des données numériques. Ce processeur DSP est affecté principalement aux tâches de compression et de décompression selon un algorithme qui peut être celui décrit dans l'article précité. Ce processeur DSP est muni d'une entrée HLD pour recevoir des signaux d'accusé réception, de sorties XF et $\overline{IS}$ pour envoyer des signaux d'interruption et d'une entrée INT pour recevoir des signaux d'interruption. Le processeur DSP communique vers l'extérieur, notamment, par deux lignes communes BUSSADR et BUSSD relatives respectivement à l'émission de codes d'adresse et à l'émission-réception de données. Un processeur de gestion µP gère l'émission de trames vers l'accès AE2N, et la réception de trames de l'accès AR2N. Une mémoire RMPµ fait notamment office de mémoire tampon entre le DSP et le µP pour l'échange des échantillons compressés. Cette mémoire est accessible à la fois au processeur DSP et au processeur µP. Pour cela, on utilise des interfaces d'accès IADR et IBUS commandées à partir des codes d'adresse du processeur µP au moyen d'un circuit de logique de décodage DCR. Une mémoire RMµ est plus particulièrement affectée à gérer en file d'attente les trames de signaux numériques compressés issus de l'accès AR2N. Dans le cadre de l'exemple décrit, le convertisseur CNA_AN est un convertisseur TLC320AC01 fabriqué par TEXAS INSTRUMENTS, le processeur DSP est un processeur TMS320C5x fabriqué aussi par la société TEXAS INSTRUMENTS et le processeur µP est un processeur MC68302 fabriqué par MOTOROLA. On fait intervenir différentes spécificités de ces composants. Par exemple, la mémoire BUFµ est utilisée pour emmagasiner les signaux provenant du port SCC du circuit MC68302, donc de l'accès AR2N. Le processeur µP peut être interrompu par des signaux d'interruption appliqués à ses entrées IPL1 et IPL2. Ces signaux proviennent des sorties XF et $\overline{IS}$ du processeur DSP. On fera intervenir aussi une mémoire FP organisée en pile, située, dans cet exemple, à l'intérieur du processeur DSP. Cette mémoire FP contenant des échantillons numériques, résultat de la compression, est indexée au moyen de deux pointeurs : le pointeur PtrC qui pointe sur un échantillon à fournir au convertisseur CNA_AN et un pointeur PtrF qui pointe sur la fin ou le fond de cette mémoire. La fin de cette mémoire est définie par la valeur # finFP. Une mémoire tampon TRS disposée à l'intérieur du processeur DSP, emmagasine les échantillons provenant du convertisseur. Une fois le buffer TRS complet, c'est-à-dire lorsqu'il contient N échantillons de K bits (exemple : N = 160 et K = 14 bits), une compression est effectuée sur ces N échantillons pour former une trame accessible du µP en mémoire RMPµ. Cette trame comporte un en-tête HEE suivi des données compressées. L'entête HEE comporte notamment un bit indicateur de silence SIL. A l'inverse le DSP reçoit du µP une trame comportant un en-tête HER suivi de données compressées. L'en-tête HER se compose notamment de :

- une information OIE signalant une demande d'insertion d'un échantillon factice pour le convertisseur CNA_AN,
- une information OSE signalant une demande de suppression d'un échantillon pour le convertisseur CNA_AN,
- une information EOA signalant que les insertions ou les suppressions d'échantillons doivent s'effectuer sur des périodes de silence ou non.

Ces différentes informations sont établies ou mises à jour lors des traitements qui vont être explicités dans la suite du présent exposé.

Le fonctionnement d'un tel dispositif de codage-décodage est expliqué par les organigrammes suivants.

**1° - Organigrammes régissant le fonctionnement du processeur de signal DSP.**

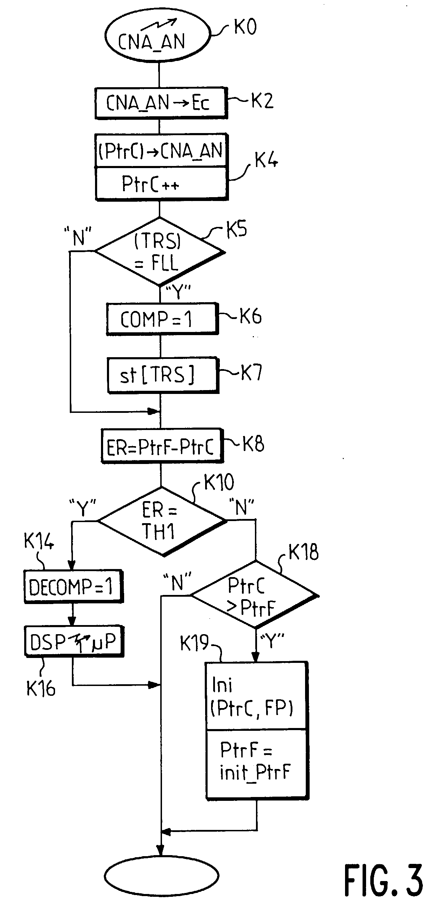

L'organigramme de la figure 3 représente un programme d'interruption qui est déclenché par une interruption surgissant à un cadence fixe. L'apparition de cette interruption survenant, dans le cadre de l'exemple décrit, toutes les 125 μs, est fixée par le rythme de travail du convertisseur CNA_AN. Ceci est noté à la case KO. Une première tâche effectuée par ce programme d'interruption consiste à lire un échantillon Ec formé par le convertisseur CNA_AN (case K2) et à le mettre dans la mémoire TRS. Une deuxième tâche indiquée à la case K4 consiste à fournir au convertisseur CNA_AN un échantillon provenant de la mémoire FP en un emplacement défini par le pointeur PtrC qui est ensuite incrémenté d'une unité. La case K5 montre un test pour savoir si la mémoire TRS est pleine ou non. Si elle est pleine, on va à la case K6 où une variable COMP est mise à "1". Ceci aura pour conséquence, comme on le verra dans la suite du présent exposé, de déclencher l'algorithme de compression par le processeur DSP. Puis, comme indiqué à la case K7, la mémoire TRS est réinitialisée, son pointeur est remis à sa position initiale pour qu'à la prochaine opération la concernant, le premier emplacement soit utilisé. A la case K8 qui suit la case K7, on examine l'état de remplissage ER de la mémoire en pile FP. Ceci est simplement calculé en effectuant la différence desdits pointeurs PtrC et PtrF. Cet état est testé à la case K10. Pour que cet état soit déclaré satisfaisant, il faut que cette différence soit égale à une valeur TH1. Cette valeur correspond au temps maximum nécessaire au processeur DSP pour décompresser une trame, sachant que le processus de compression est prioritaire.

Si on estime que l'état testé à la case K10 est satisfaisant, on met à "1" une variable DECOMP qui va autoriser le processus de décompression (case K14). On déclenche ensuite, comme indiqué à la case K16, une interruption sur la borne IPL1 vers le processeur pour que d'autres informations compressées soient fournies au processeur DSP, comme cela va être décrit par la suite.

Si cet état n'est pas satisfaisant, on teste tout d'abord, à la case K18, les valeurs relatives des pointeurs PtrC et PtrF. Si la valeur de PtrC est inférieure à celle de PtrF, aucune mesure n'est entreprise et le programme d'interruption est terminé. Si la valeur de PtrC est supérieure à celle de PtrF, on procède alors, case K19, aux réinitialisations des différents pointeurs PtrC, PtrF et de la mémoire FP. Notamment, le pointeur PtrF est affecté de la valeur Init_PtrF.

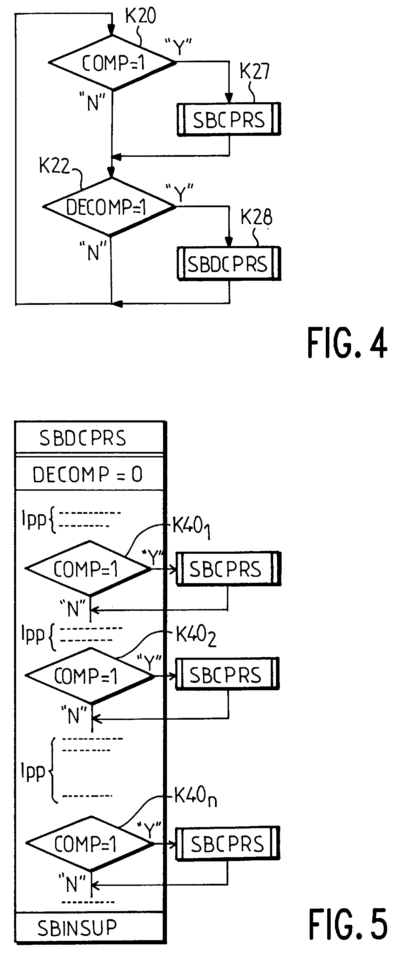

La figure 4 est l'organigramme montrant le fonctionnement global du processeur DSP, c'est un programme bouclé sur lui-même. Il se compose essentiellement de deux tests indiqués respectivement aux cases K20 et K22. Le premier teste la valeur de la variable COMP déjà mentionnée et le deuxième la valeur de la variable DECOMP. Si COMP a la valeur "1", on effectue le sous-programme SBCPRS relatif à la compression (case K27). Si DECOMP a la valeur "1", on effectue le sous-programme SBDCPRS relatif à la décompression (case K28). Il va de soi qu'un tel programme subit les interruptions du convertisseur CNA_AN et que, notamment les valeurs COMP et DECOMP peuvent changer. Ainsi, dans le sous-programme SBDCPRS, montré à la figure 5, on examine périodiquement si la valeur COMP a la valeur "1" (voir cases $K40_1$, $K40_2$, ...., $K40_n$). Si la valeur "1" est présente, le sous-programme SBDCPRS est en quelque sorte interrompu, conformément à l'invention, afin que le sous-programme SBCPRS soit exécuté en priorité. Les lignes en pointillé "lpp" représentées à cette figure 5 sont des lignes de programme relatives à la décompression qui ne sont pas explicitées car ne rentrant pas dans le cadre de l'invention. Mais ces lignes peuvent être établies à partir de la lecture de l'article précité.

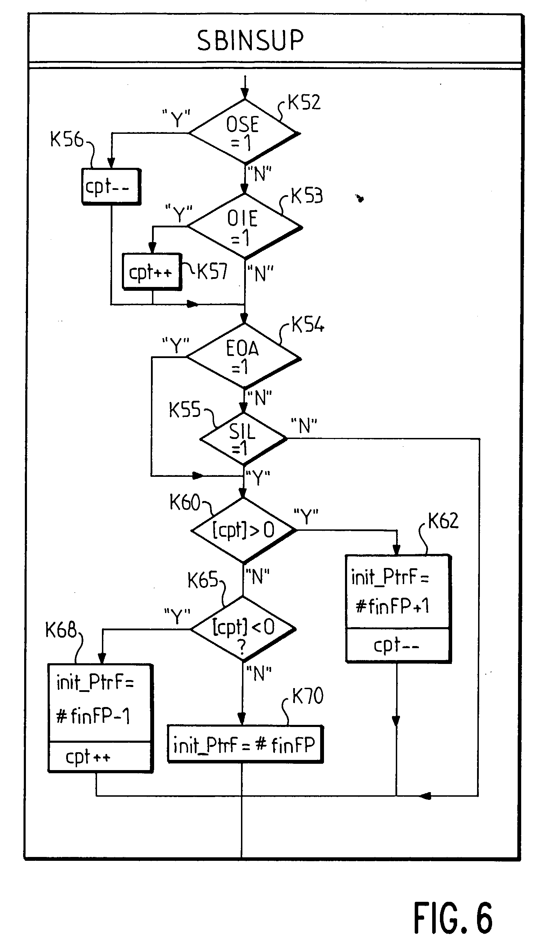

Le sous-programme SBDCPRS se termine par un appel à un sous-programme SBINSUP, montré à la figure 6.

Ce sous-programme commence par l'analyse de l'en-tête de la trame de signaux vocaux numériques compressés contenue dans la mémoire RMPμ. Les cases K52, K53 et K54 qui suivent indiquent des tests pour savoir si les informations précitées OSE, OIE et EOA sont égales à "1". Si OSE a la valeur "1", un compteur cpt est décrémenté d'une unité (case K56). Il va de soi qu'un tel compteur a été initialisé à zéro, au préalable d'une communication. Si OIE a la valeur "1", ce compteur cpt est incrémenté d'une unité (case K57). Si l'ordre EOA a la valeur "1", on teste tout de suite, à la case K60, le contenu du compteur cpt. Si celui-ci est positif on insère un échantillon. Pour cela, différentes actions sont entreprises : on incrémente la valeur d'initialisation du pointeur PtrF (case K62) de manière à augmenter la taille de la trame nouvellement décompressée (figure 5) et donc la mémoire tampon FP, en la faisant passer de N à N + 1 échantillons, ce qui a pour effet de ralentir les échanges de trames entre le DSP et le μP (cases K8, K10, K14 et K16) et on décrémente d'une unité le compteur cpt. Si le test indiqué à la case K60 est négatif, on teste, alors, si le contenu du compteur cpt est négatif (case K65). Si celui-ci est négatif on va supprimer le dernier échantillon (case K68). Pour cela, on décrémente la valeur initiale # finFP du pointeur PtrF : Init_PtrF, d'une unité pour diminuer la taille de la trame nouvellement décompressée, et par conséquent la taille de la mémoire tampon FP en la faisant passer de N à N - 1 échantillons, ce qui a pour effet d'accélérer les échanges de trames entre le DSP et le μP (cases K8, K10, K14 et K16) et on incrémente d'une unité le compteur cpt. Ensuite, on incrémente le pointeur PtrC d'une unité de sorte qu'un échantillon sera sauté lors de sa lecture indiquée à la case K4 de la figure 3. Si le test de la case K65 est négatif, cela signifie que la valeur de "cpt" est "0", on passe alors à la case K70, où la valeur initiale de PtrF correspond à sa valeur nominale. Si le code EOA n'a pas été envoyé, on passe à la case K55 pour savoir si on est en présence d'échantillons de silence. S'il n'y a pas de silence, aucune action n'est entreprise. Si l'on détecte du silence, on passe à la case K60.

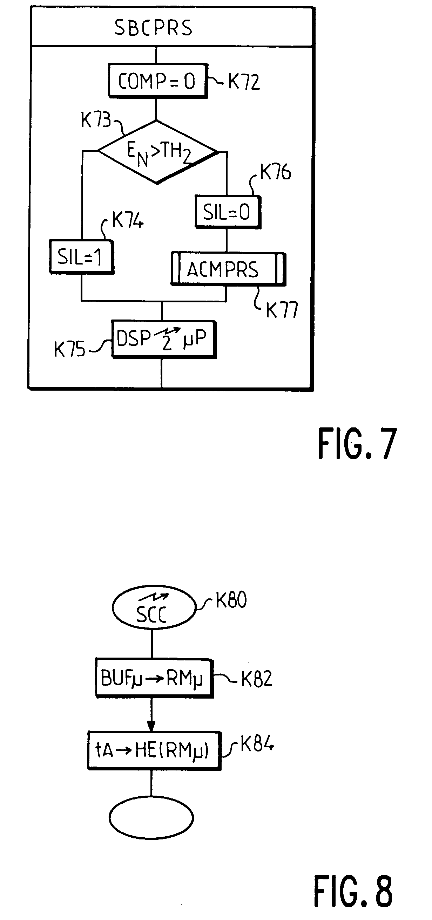

La figure 7 explicite le sous-programme de compression SBCPRS. La première tâche effectuée dans ce sous-programme est montrée à la case K72. Elle consiste à mettre à zéro la variable COMP. Puis on teste l'énergie moyenne EN des échantillons à comprimer. Si cette valeur est inférieure à une certaine valeur TH2, on considère que ces échantillons représentent du silence et on passe à la case K74 où l'on met à "1" la variable SIL pour indiquer ce fait et le sous-programme est terminé en passant par la case K75, qui implique le déclenchement d'une interruption pour le processeur μP, déclenchée par un signal appliqué à l'entrée IPL2. Si l'on n'a pas affaire à des échantillons de silence, alors la variable SIL est mise à zéro, case K76, et l'on passe à la case K77 qui indique le déclenchement du sous-programme de compression ACMPRS avant de passer à la case K75. Ce sous-programme de compression peut être établi au moyen de l'enseignement fourni par l'article précité.

## 2° Organigrammes régissant le fonctionnement du processeur de gestion μP.

La figure 8 montre un premier organigramme explicitant le fonctionnement du processeur μP. Cet organigramme est relatif à un programme d'interruption déclenché au niveau du port série du processeur. Ce processeur est, en effet, muni d'un système pour gérer une liaison série qui est connectée à l'accès AR2N. C'est l'accès qui reçoit les trames de signaux numériques compressés. Dès que la mémoire tampon BUFμ associée à ce port série est pleine, elle contient alors une trame constituée d'un paquet de parole compressée, d'octets d'adressage et de contrôle. Une interruption est déclenchée à l'intérieur du processeur μP (case K80). Cette interruption entraîne une première action qui consiste à libérer cette mémoire BUFμ en transférant son contenu dans la mémoire RMμ (case K82). Une deuxième action est indiquée à la case K84, on attribue une date "tA" à la trame ainsi transférée. Cette date est insérée dans l'en-tête de trame HE.

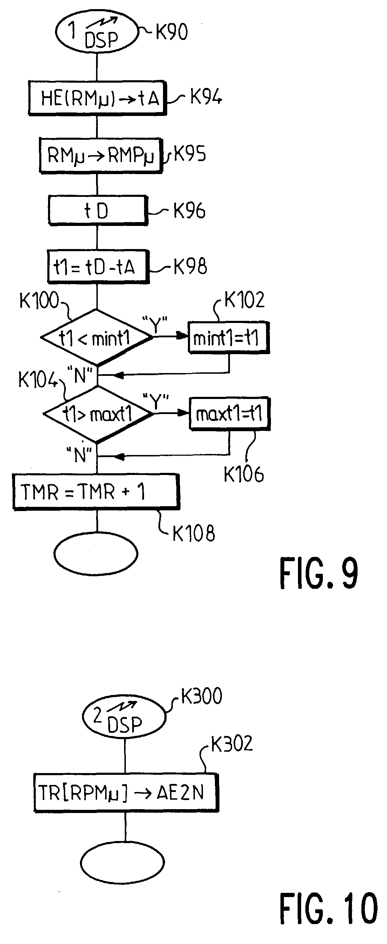

La figure 9 montre un deuxième organigramme explicitant le fonctionnement du processeur μP. Cet organigramme est relatif à un premier programme d'interruption réception déclenché par le processeur DSP au moyen d'un signal appliqué à l'entrée IPL1 (case K16 de la figure 3). On prélève, comme indiqué à la case K94, l'en-tête HE, de la trame la plus ancienne et celle-ci est transférée dans la mémoire RHPμ (case K95). Puis on détermine une date "tD" liée à ce dernier événement (case K96). La case K98, qui suit, explicite une durée "t1" qui est la différence entre les dates "tA" et "tD".
A la case K100, on indique une comparaison de cette valeur t1 à une grandeur mint1 qui a été initialisée à une valeur importante, lors de l'établissement de la communication notamment. Si t1 est plus petit que mint1, alors mint1 prend la valeur de t1 (case K102). Puis, on passe à la case K104 où l'on teste la valeur de t1 par rapport à une valeur maxt1 qui a été initialisée à une petite valeur lors de l'initialisation. Si t1 est plus grand que la valeur maxt1, alors maxt1 prend la valeur t1 (case K106). La case K108 qui termine ce programme d'interruption incrémente une variable de chronométrage TMR d'une unité.

La figure 10 montre un troisième organigramme explicitant le fonctionnement du processeur μP. Cet organigramme est relatif à un programme d'interruption déclenché sur la ligne IPL2 par le DSP à la fin du processus de compression. Cette interruption, indiquée à la case K300, provoque l'émission sur la ligne LAB en passant par l'accès AE2N d'une trame de signaux compressés qui était contenue dans une partie TR de la mémoire RHPμ (case K302).

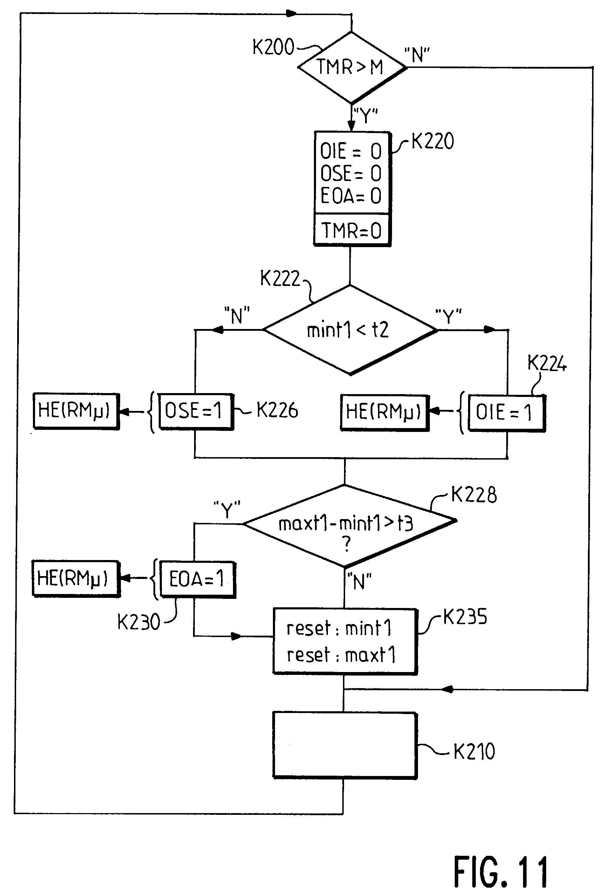

La figure 11 est l'organigramme montrant le fonctionnement global du processeur μP, c'est un programme bouclé sur lui-même.

Ce programe débute à la case K200 où l'on teste la valeur du compteur TMR par rapport à une valeur trames M transmise pendant un temps de l'ordre de 10 s par exemple (1/20 ms * 10 s = 500 trames).
M représente le nombre de trames à attendre pour gérer l'offset de fréquence ($\Delta$) entre les cartes CVA et CVB. La valeur de M est encadrée par le maximum de l'offset et par le taux de pleurage maximum toléré (T). Plus précisément, on choisit M tel que : $\Delta < (M*N)^{-1} < \tau$, avec N, le nombre d'échantillons par trame. Si cette valeur n'est pas atteinte, aucune action n'est entreprise et l'on va à la case K210 qui représente différentes tâches que le processeur a à effectuer et qui n'ont pas à être détaillées car ne faisant pas partie de l'invention. Si la période est écoulée, on va à la case K220 qui indique l'initialisation à zéro de différentes valeurs OIE, OSE, EOA et TMR. On passe ensuite à la case K222 où l'on teste la valeur mint1 à une valeur t2 qui est une marge de sécurité minimum pour que la pile de réception des trames du réseau, RMμ, ne soit jamais vide lors d'une requête DSP pour une décompression. Cette marge a été choisie proche de 5 ms. Si la valeur mint1 est inférieure à cette valeur t2, cela veut dire que la pile RMμ se vide et qu'il convient de rajouter des échantillons. Pour cela, la valeur OIE = 1 est mise dans l'en-tête de la trame, c'est ce qui est indiqué à la case K224. Si la valeur mintl excède la valeur t2, alors il convient d'entreprendre la mesure inverse, c'est-à-dire de supprimer des échantillons. La case K226 montre la mise dans l'en-tête de la valeur "1" à la variable OSE. La case K228 qui suit est une mesure et un test de l'écart de gigue. Ceci est obtenu en effectuant la différence entre maxt1 et mint1. Si cet écart est trop grand et supérieur à une valeur t3, qui est de l'ordre de M divisé par la fréquence d'échantillonnage soit environ 5 ms, alors on prend des mesures plus draconiennes. Ces mesures consistent à mettre à "1" la variable EOA dans l'en-tête (case K230) afin que le processeur DSP insère un échantillon dans toutes les trames même si elles ne concernent pas du silence. Après ces mesures, on passe à la case K235 qui indique une réinitialisation des valeurs mint1 et maxt1.

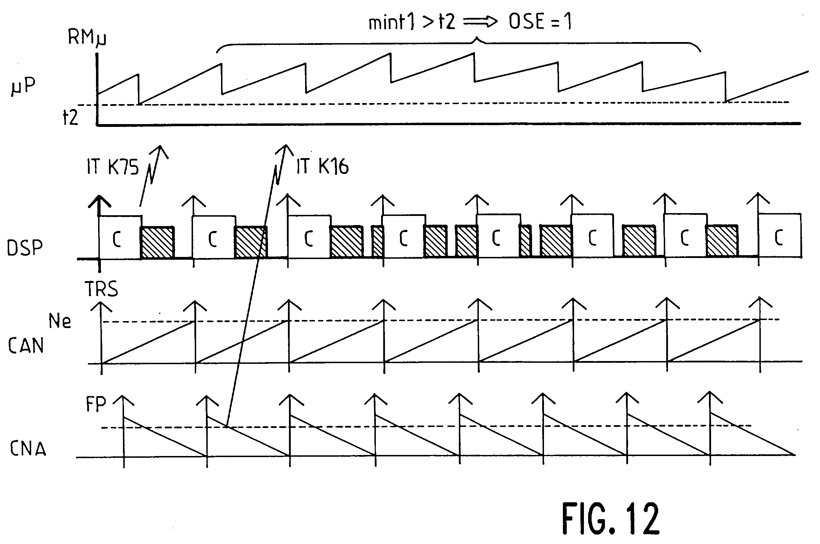

La figure 12 résume le fonctionnement du dispositif de l'invention. Cette figure 12 montre le remplissage de la mémoire TRS par le CAN, qui commande la compression d'une trame par le DSP. Cette compression se termine par une interruption (cf case K75, figure 7), émise par le DSP et qui permet au µP de lire RMPµ et d'envoyer la trame compressée sur le réseau via l'accès AE2N. On remarque que le processus de compression est prioritaire par rapport à la décompression et peut même l'interrompre. Le processus de décompression est déclenché (K14), en même temps que l'IT K16, lorsque le taux de remplissage de la mémoire FP atteint le seuil TH1 (cf figure 3). La ligne RMµ de la figure 12 montre l'état de remplissage de la mémoire RMµ. Sur l'interruption K16, le µP exécute le sous-programme de la figure 9, et écrit donc une trame compressée dans la mémoire RMPµ accompagnée notamment d'une commande OIE/OSE. La figure 12 illustre un exemple pour lequel la mémoire RMµ reçoit trop de données du réseau en comparaison des données qu'elle émet vers le DSP. Ainsi des commandes OSE sont envoyées vers le DSP et donc certaines trames reçues par le CNA sont amputées d'un échantillon. Ainsi les décompressions peuvent être effectuées à un rythme trame plus rapide. Dans un cas contraire où la mémoire RMµ ne recevrait pas assez de données du réseau, des commandes OIE seraient alors envoyées vers le DSP.

**Revendications**

1.  Système de transmission de signaux vocaux sous forme de trames de signaux numériques, entre au moins un premier abonné et un deuxième abonné comportant notamment :

    ■   un milieu de transmission pour transmettre lesdites trames,
    ■   des premiers accès réception (AR1A, BR1A) pour recevoir des signaux analogiques vocaux desdits abonnés,
    ■   des premiers accès émission (AE1A, BE1A) pour fournir des signaux analogiques vocaux auxdits abonnés,
    ■   au moins un dispositif de codage-décodage (CVA) pour former lesdites trames de signaux numériques après compression des signaux analogiques vocaux et pour rétablir, sous forme analogique, les signaux vocaux analogiques après décompression des trames numériques, dispositif muni :

    -   d'un accès réception de trames pour recevoir lesdites trames (AR2N),
    -   d'un accès émission de trames pour fournir lesdites trames (AE2N),
    -   d'un circuit de compression-décompression (CPRSSA - DECPRSSA) pour effectuer lesdites opérations de compression et de décompression,
    -   de moyens de commandes couplés audit dispositif de compression-décompression pour commander la compression et la décompression,

    système caractérisé en ce que :
    ■   le circuit de compression-décompression est conçu pour effectuer une compression et une décompression séquentiellement,
        et en ce qu'il est prévu :
    ■   des moyens de priorité pour agir sur les moyens de commande pour mettre le dispositif de compression-décompression en position de compression prioritairement à la position de décompression.

2.  Système de transmission selon la revendication 1, caractérisé en ce que le dispositif de codage-décodage (CVA) comporte :

    ■   une mémoire intermédiaire TRS pour contenir au moins une trame d'échantillons numériques, résultat de la compression,
    ■   des premiers moyens de gestion pour fournir ladite trame audit accès émission de trames dès qu'elle est élaborée par le circuit de compression-décompression.

3.  Système de transmission selon la revendication 2, caractérisé en ce que le dispositif de codage-décodage (CVA) comporte :
    des deuxièmes moyens de gestion pour fournir une trame reçue à l'accès réception (AR2N) audit circuit de compression-décompression pour minimiser le temps de traversée.

4.  Système de transmission selon l'une des revendications 1 à 3, caractérisé en ce que le circuit de compression-décompression comporte :

    ■   une mémoire tampon (FP) montée en file d'attente pour contenir des échantillons numériques, résultat de la décompression,
    ■   un circuit convertisseur numérique-anologique pour fournir lesdits signaux analogiques vocaux à partir de ces échantillons numériques,
    ■   des troisièmes moyens de gestion pour effectuer une demande de décompression lorsque ladite mémoire tampon est estimée trop vide.

5. Système de transmission selon l'une des revendications 1 à 4, caractérisé en en ce que le dispositif de codage-décodage (CVA) comporte :
des moyens pour compenser la gigue apportée par le milieu de transmission.

6. Dispositif de codage-décodage (CVA) pour coder sous forme numérique les signaux analogiques vocaux et pour coder sous forme analogique des signaux numériques vocaux, convenant à un système selon l'une des revendications 1 à 5, dispositif muni :

- d'un accès réception de trames pour recevoir lesdites trames (AR2N),
- d'un accès émission de trames pour fournir lesdites trames (AE2N),
- d'un circuit de compression-décompression (CPRSSA-DECPRSSA) pour effectuer lesdites opérations de compression et de décompression,
- de moyens de commandes couplés audit dispositif de compression-décompression pour commander la compression et la décompression,

système caractérisé en ce que :

■ le circuit de compression-décompression est conçu pour effectuer une compression et une décompression séquentiellement,

et en ce qu'il est prévu :

■ des moyens de priorité pour agir sur les moyens de commande pour mettre le dispositif de compression-décompression en position de compression prioritairement à la position de décompression.

EP 0 723 346 A1

FIG. 1

FIG. 2

8

FIG. 3

FIG. 4

FIG. 5

## SBINSUP

FIG. 6

SBCPRS

COMP = 0 — K72

K73 — $E_N > TH_2$

K76 — SIL = 0

K74 — SIL = 1

ACMPRS

K77

K75 — DSP $\overset{\nearrow}{2}$ μP

## FIG. 7

SCC — K80

BUFμ → RMμ — K82

tA → HE(RMμ) — K84

## FIG. 8

```
        ⟨1 DSP⟩ ⟍K90

        ┌─────────────┐
        │ HE(RMµ)→tA  │ ⟍K94
        └─────────────┘

        ┌─────────────┐
        │ RMµ→RMPµ    │ ⟍K95
        └─────────────┘

        ┌─────────────┐
        │     tD      │ ⟍K96
        └─────────────┘

        ┌─────────────┐
        │  t1 = tD-tA │ ⟍K98
        └─────────────┘

K100⟍
      ◇ t1 < mint1 ◇ ──"Y"──→ ┌──────────┐ K102
                              │ mint1=t1 │
          │"N"                └──────────┘
K104⟍     │          ←─────────────┘
      ◇ t1 > maxt1 ◇ ──"Y"──→ ┌──────────┐
                              │ maxt1=t1 │
          │"N"                └──────────┘
          │          ←─────────────┘  ⟍K106
      ┌──────────────┐
      │ TMR = TMR + 1│
      └──────────────┘
                      ⟍K108
          ⬭
```

## FIG. 9

```
        ⟨2 DSP⟩ ⟍K300

                    ⟍K302
        ┌────────────────────┐
        │ TR[RPMµ] → AE2N     │
        └────────────────────┘

            ⬭
```

## FIG. 10

FIG. 11

FIG. 12

EP 0 723 346 A1

Office européen
des brevets

**RAPPORT DE RECHERCHE EUROPEENNE**

Numero de la demande

EP 95 20 3454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 823 342 (MORITA ET AL.)<br>* colonne 3, ligne 19 - colonne 4, ligne 19 *<br>* revendications 2,4 *<br>--- | 1-6 | H04J3/18 |
| A | US-A-4 839 906 (LEVEQUE ET AL.)<br>* colonne 2, ligne 9 - ligne 61 *<br>* colonne 4, ligne 31 - colonne 5, ligne 16 *<br>* revendication 1 *<br>--- | 1-6 | |
| A | COMPUTER DESIGN,<br>vol. 32, no. 10, 1993 WESTFORD, MASSACHUSETTS US,<br>page 110 'Audio decompression IC is first single chip decoding system'<br>----- | 1,4 | |

| | | | DOMAINES TECHNIQUES RECHERCHES (Int.Cl.6) |
|---|---|---|---|
| | | | H04J<br>H03M<br>H04L<br>H04B |

Le présent rapport a été établi pour toutes les revendications

| Lieu de la recherche | Date d'achèvement de la recherche | Examinateur |
|---|---|---|
| LA HAYE | 18 Janvier 1996 | Canali, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)